# EUROPÄISCHE PATENTANMELDUNG

(11) **EP 0 906 725 A1**
(43) Veröffentlichungstag der Anmeldung: **07.04.1999**
(21) Anmeldenummer: 97117085.7
(22) Anmeldetag: 02.10.1997
(51) Int. Cl.: A21D 13/00, A21C 11/02, A21C 11/00

(54) **Vorrichtung zur Herstellung von Telgteilen**

(71) Anmelder: Dieter Sönnichsen Maschinen-und Stahlbau GmbH, 25712 Burg (DE)
(72) Erfinder: Cawl, Ingo, Dipl.-Ing., 12207 Berlin (DE); Conrad, Andreas, Dipl.-Ing., 13503 Berlin (DE); Mollath, Günter, Dipl.-Ing., 12249 Berlin (DE)
(74) Vertreter: Trappenberg, Hans

(57) **Zusammenfassung**

Eine Vorrichtung zur Durchführung eines Verfahrens zur Herstellung von Teigteilen vorbestimmter Fläche und vorbestimmten Dickenprofils, bei welchem eine vorbestimmte Menge Teig auf eine Unterlage aufgebracht wird und auf den Teig mittels eines Werkzeugs Druck ausgeübt wird, wobei das Werkzeug auf den Teig aufgesetzt wird und den Teig zunächst punkt- oder linienförmig berührt, wobei von der Berührungslinie keine Fläche aufgespannt wird und das Werkzeug sodann bis auf einen vorbestimmten Abstand zur Unterlage in den Teig eindringt, wobei die Punkt- oder linienförmige Berührung in eine erste flächige Berührung des Teigs übergeht und der Teig unter der ersten Berührungsfläche mit einer ersten Kraft auf die Unterlage gepreßt wird, und die erste Berührungsfläche dann um eine Erweiterungsfläche vergrößert und der Teig unter der Erweiterungsfläche sodann mit einer zweiten Kraft auf die Unterlage gepreßt wird, wobei die Vergrößerung der Fläche sowie das Aufpressen des Teigs auf die Unterlage solange wiederholt werden, bis die Fläche des Teigteils einer zweiten vorbestimmten Fläche entspricht, weist eine Auflageplatte 22 und ein auf die Auflageplatte 22 absenkbares Werkzeug 23 auf. Das Werkzeug 23 ist als verformbarer Druckkörper ausgebildet, welcher in seinem Ausgangszustand an seiner der Auflageplatte 22 zugewandten Seite einen Pol 24 oder einen First aufweist. Der Druckkörper weist einen örtlich unterschiedlichen Verformungswiderstand auf.

## Beschreibung

Die Erfindung betrifft eine Vorrichtung zur Herstellung von Teigteilen vorbestimmter Fläche und vorbestimmtem Dickenprofils, bei welchem eine vorbestimmte Menge Teig auf eine Unterlage aufgebracht wird und auf den Teig mittels eines Werkzeugs Druck ausgeübt wird, wobei die Vorrichtung eine Auflageplatte und ein auf die Auflageplatte absenkbares Werkzeug aufweist.

Da in der heutigen Zeit in verstärktem Maße auf fertige Gerichte zurückgegriffen wird, welche in kürzester Zeit fertig zum Verzehr sind, wird von der Industrie eine immer größer werdende Zahl unterschiedlicher Gerichte angeboten. Dabei spielen die Gerichte, welche auf einer vorgebackenen Teigunterlage angeboten werden, eine bedeutende Rolle. Bei der Herstellung dieser Gerichte wird zunächst die Teigunterlage, welche regelmäßig eine vorbestimmte Form haben muß, hergestellt.

Zur Herstellung derartiger Teigunterlagen sind unterschiedliche Verfahren bekannt. So ist es bekannt, eine Teigunterlage vorbestimmter Form aus einem kontinuierlich hergestellten Teigband auszustanzen. Man erhält hierdurch eine Teigunterlage, welche durch eine mehr oder weniger konstante Dicke gekennzeichnet ist.

Oftmals ist es jedoch erwünscht, daß die Teigunterlage ein unterschiedliches Dickenprofil aufweist. Insbesondere ist es oftmals wünschenswert, wenn die Teigunterlage am Rand dicker ist als in der Mitte.

Eine derartige Teigunterlage kann dadurch geschaffen werden, daß eine vorbestimmte Menge Teig in eine Form eingebracht wird und in die Form ein entsprechend ausgebildeter Stempel abgesenkt wird. Hierdurch wird auf den Teig ein Druck ausgeübt, so daß er sich in der Form verteilt. Die Form ist so ausgebildet, daß die Teigunterlage am Rand dicker ist als in der Mitte.

Das durch die Pressung erzwungene Fließen des Teigs durch die gesamte Form wirkt sich jedoch nachteilig auf die Struktur des Teigs aus. So kann die Struktur des Teigs zumindest teilweise zerstört werden. Eine Zerstörung der Struktur des Teigs wirkt sich jedoch sehr nachteilig auf die Qualität des Teigs aus. Darüber hinaus läßt die Qualität des durch die Pressung erhaltenen dickeren Randes zu wünschen übrig.

Aus der NL 90 00 395 A ist eine Vorrichtung nach dem Oberbegriff des Anspruchs 1 bekannt, welche eine Auflageplatte und ein auf die Auflageplatte absenkbares Werkzeug aufweist. Das Werkzeug ist ein als Ballon ausgebildeter verformbarer Druckkörper, welcher in seinem Ausgangszustand an seiner der Auflageplatte zugewandten Seite einen Pol aufweist.

Der genannten Druckschrift kann entnommen werden, daß der Druck innerhalb des Ballons eingestellt werden kann. Hierdurch läßt sich der Verformungswiderstand des Ballons einstellen. Über die Größe des Verformungswiderstands läßt sich die Dicke der Teigunterlage einstellen. Mittels der bekannten Vorrichtung ist es jedoch nicht möglich eine Teigunterlage herzustellen, welche ein unterschiedliches Dickenprofil aufweist.

Es ist Aufgabe der Erfindung eine eingangs genannte Vorrichtung derart auszubilden, daß eine Teigunterlage vorbestimmter Fläche hergestellt werden kann, welche ein unterschiedliches Dickenprofil aufweist, wobei die Struktur des Teigs nahezu erhalten bleibt.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung wird das Werkzeug so auf den Teig aufgesetzt, daß es den Teig zunächst punkt- oder linienförmig berührt, wobei von der Berührungslinie keine Fläche aufgespannt wird. Nach dem Aufsetzen des Werkzeugs auf den Teig wird das Werkzeug bis auf einen vorbestimmten Abstand zur Unterlage wenigstens teilweise in den Teig gedrückt. Durch das teilweise Eindringen des Werkzeugs in den Teig geht die punkt- oder linienförmige Berührung in eine erste flächige Berührung des Teigs über, wobei die Berührungsfläche zunächst in einem Winkel zur Unterlage verläuft und sich solange neigt, bis sie etwa in einem Abstand parallel zur Unterlage verläuft. Schließlich wird der Teig unter der ersten Berührungsfläche mit einer ersten Kraft auf die Unterlage gepreßt. Durch den Übergang der punkt- oder linienförmigen Berührung in die erste flächige Berührung des Teigs findet eine Verdrängung des Teigs durch das Werkzeug statt.

Durch das Eindringen des Werkzeugs in den Teig bis auf einen vorbestimmten Abstand zur Unterlage wird zunächst an der Stelle, wo das Werkzeug in den Teig eindringt, der sich an dieser Stelle befindliche Teig bis auf die zwischen der sich in einem vorbestimmten Abstand zur Unterlage befindlichen Werkzeugspitze und der Unterlage befindlichen Teigmenge Teig verdrängt. Bei einem Werkzeug, welches den Teig zunächst punktförmig berührt, findet die Verdrängung radial nach außen statt. Bei einem Werkzeug, welches den Teig linienförmig berührt, findet die Verdrängung des Teigs in beide Richtungen etwa senkrecht zur Berührungslinie statt.

Durch den Übergang der punkt- oder linienförmigen Berührung in eine erste flächige Berührung des Teigs wird die Verdrängung des Teigs unterhalb der Berührungsfläche fortgesetzt. Die Verdrängung des Teigs geschieht somit solange, bis sich die Berührungsfläche ebenfalls in einem vorbestimmten Abstand zur Unterlage befindet.

Nachdem der Teig unterhalb der ersten Berührungsfläche nach außen verdrängt wurde, wird die erste Berührungsfläche um eine Erweiterungsfläche vergrößert, wobei die Erweiterungsfläche zunächst in einem Winkel zur Unterlage verläuft und sich solange neigt, bis sie etwa in einem Abstand parallel zur Unterlage verläuft. Schließlich wird der Teig unter der Erweiterungsfläche ebenfalls auf die Unterlage gepreßt. Dies kann mit einer zweiten Kraft geschehen. Durch die Vergrößerung der ersten Berührungsfläche um die Erweiterungsfläche, welche soweit auf die Unterlage gepreßt wird, daß sie sich ebenfalls in einem vorbestimmten Abstand zur Unterlage befindet, wird das Fließen des Teigs in Richtung von der Berührungsfläche nach außen fortgesetzt. Die Vergrößerung der Fläche geschieht im wesentlichen derart, daß die Erweiterungsfläche in kleinsten Schritten an die Berührungsfläche angesetzt wird. Dies läßt sich in vorteilhafter Weise durch einen Abrollvorgang realisieren.

Hierdurch wird erreicht, daß der Teig ausgehend vom Berührungspunkt oder der Berührungslinie des Werkzeugs dergestalt nach außen verdrängt wird, wie es bei einer sogenannten Nudelrolle der Fall ist.

Die Vergrößerung der Fläche sowie das Aufpressen des Teigs auf die Unterlage erfolgen solange, bis die Fläche des Teigteils um den Anteil der elastischen Verformung des Teigteils größer als die vorbestimmte Fläche ist. Durch die Verdrängung des Teigs soweit, bis die Fläche des Teigteils um den Anteil der elastischen Verformung des Teigteils größer als die vorbestimmte Fläche ist, wird erreicht, daß sich das Teigteil, nachdem das Werkzeug entfernt ist und sich die elastische Verformung zurückbilden kann, auf die vorbestimmte Fläche zusammenzieht. Durch die Dauer der Pressung des Teigs kann die Form und Struktur des Teigteils eingestellt werden.

Da der Teig nicht mehr wie bisher vollständig und gleichzeitig einem flächigen Druck ausgesetzt wird, wodurch der Teig verdichtet und die innere Struktur des Teigs nachteilig verändert wird, sondern der Teig etwa kontinuierlich ausgehend von seinem Zentrum aus nach außen nach und nach verdrängt und im wesentlichen nicht mehr verdichtet wird, bleibt die innere Struktur des Teigs weitgehend erhalten. Es wird hierdurch in etwa dieselbe Qualität, wie bei manuell hergestellten Teigteilen erreicht. Dies wirkt sich äußerst vorteilhaft auf die Qualität des gebackenen Teigteils aus.

Da durch das Werkzeug ein Verformungskörper gebildet wird, bei dem mit zunehmender Preßkraft der Teig durch elastische Verformung des Werkzeugs zum Rand hin verdrängt wird, ohne daß in den Teig eine extreme Druckspannung induziert wird, bleibt die innere Struktur des Teiges weitestgehend erhalten. Es kommt nicht zu einer sogenannten Klietschbildung. Der Verformungskörper ist so ausgebildet, daß sich aufgrund der Abplattung, die er durch die Preßkraft erhält, am Rand eine Wulst ausbildet, die den Teig in Richtung des Randes verdrängt. Die aktive Wulst des Verformungskörpers kann dabei als Teil eines Torus betrachtet werden, dessen Erzeugende radial in Richtung des Randes des Teigteils rollt. Das Teigteil wird somit in radialer Richtung ausgerollt. Das dabei abgeplattete Segment des Verformungskörpers verhindert das Rückwärtsfließen des Teigs in Richtung Rondenmitte.

In vorteilhafter Weise wird die Vergrößerung der Fläche an die Fließgeschwindigkeit des Teigs angepaßt. Hierdurch wird gewährleistet, daß nahezu sämtlicher Teig durch seitliche Verdrängung wegfließt und nicht durch senkrechte Pressung des Teigs zwischen der Werkzeugfläche und der Unterlage. Die Oberfläche des Werkzeugs und/oder der Unterlage kann mit einem Trenn- oder Gleitmittel versehen sein.

Bei einer weiteren Ausführungsform der Erfindung ist vorgesehen, daß während der Zeit, während der der Teig unter der Erweiterungsfläche auf die Unterlage gepreßt wird, der Teig unter der ersten Berührungsfläche mit einer dritten Kraft auf die Unterlage gepreßt wird. Hierdurch läßt sich eine Teigunterlage unterschiedlichen Dickenprofils herstellen. Sind die erste, die zweite und die dritte Kraft gleichgroß, wird eine gleichmäßige Dicke des Teigteils erreicht, wie dies häufig gewünscht wird.

Statt auf den Bereich des Teigteils, in dem das Teigteil schon seine vorbestimmte Dicke erreicht hat, das heißt überschüssiger Teig schon nach außen verdrängt wurde, nach der Verdrängung des Teigs weiterhin Druck auszuüben, kann dieser Bereich auch drucklos gehalten werden, wie dies eine weitere Ausführungsform der Erfindung vorsieht. Bei einer solchen Ausführungsform der Erfindung wird das Werkzeug ebenfalls zunächst auf den Teig aufgesetzt, so daß es den Teig punkt- oder linienförmig berührt, wobei von der Berührungslinie keine Fläche aufgespannt wird, und das Werkzeug danach dann bis auf einen vorbestimmten Abstand zur Unterlage wenigstens teilweise in den Teig eingedrückt.

Durch das Eindringen des Werkzeugs in den Teig wird der Teig durch eine Komponente der vom Werkzeug auf den Teig ausgeübten Kraft parallel zur Ebene der Unterlage in seitliche Richtung verdrängt. Dies wird dadurch erreicht, daß der Umfang des Werkzeugs wie bei einem Kegel parallel zur Ebene der Unterlage in die von der Unterlage abweisende Richtung zunimmt. Ist das Werkzeug soweit in den Teig eingedrungen, daß sich die Werkzeugspitze in einem vorbestimmten Abstand zur Unterlage befindet, geht die durch die Werkzeugspitze erfolgte punkt- oder linienförmige Berührung jedoch nun in eine den Rand einer umschlossenen Fläche bildenden Linie über, welche in einem vorbestimmten Abstand zur Unterlage verläuft und auf den Teig einen extra linienförmigen Druck ausübt. Die von der Berührungslinie umschlossene Fläche wird dann solange vergrößert, bis sie etwa der vorbestimmten Fläche entspricht.

Bei einem derartigen Verfahren wird auf den Teig kein flächiger Druck mehr ausgeübt, sondern ein etwa linienförmiger Druck, wobei die Drucklinie während eines Arbeitszyklus sich in Richtung des Randes des fertigen Teigteils fortbewegt. Hierdurch wird der Teig ebenfalls nach außen verdrängt, jedoch kann sich der Teig, nachdem die Drucklinie über ihn hinweggegangen ist, wieder entspannen. Dies kann für bestimmte herzustellende Teigteile vorteilhaft sein.

Eine Vorrichtung zur Durchführung des vorstehend beschriebenen Verfahrens hat eine Auflageplatte und ein auf die Auflageplatte absenkbares Werkzeug. Das Werkzeug weist einen verformbaren Druckkörper auf, welcher in seinem Ausgangszustand an seiner der Auflageplatte zugewandten Seite einen Pol oder einen First aufweist. Durch den verformbaren Druckkörper wird wie beim Stand der Technik erreicht, daß sich die Flache des Werkzeugs, mit der das Werkzeug den Teig auf die Auflageplatte preßt, stetig vergrößert. Nachdem zunächst der Pol oder der First auf das Teigteil aufgesetzt wird, verformt sich der Druckkörper durch den Druck, der das Teigteil dem Druckkörper entgegenbringt, beim Absenken des Werkzeugs auf die Unterlage derart, daß sich der Pol oder der First abflachen.

Hierdurch geschieht eine kontinuierliche Vergrößerung der Werkzeugfläche, mit der das Werkzeug das Teigteil auf die Unterlage preßt. Die Vergrößerung der Werkzeugfläche erfolgt derart, daß sich die Erweiterungsfläche nicht parallel zur Auflageplatte auf das Teigteil aufsetzt, sondern sich ausgehend von einem Winkel zur Auflageplatte auf das Teigteil abrollt und hierdurch eine zur Auflageplatte parallele Lage einnimmt.

Ob das Werkzeug einen Pol oder einen First aufweist, hängt von dem herzustellenden Teigteil ab. Soll ein etwa kreisrundes Teigteil hergestellt werden, ist das Werkzeug so ausgebildet, daß es einen Pol aufweist. Soll hingegen ein etwa rechteckförmiges Teigteil hergestellt werden, ist das Werkzeug so ausgebildet, daß es einen First aufweist. Das Werkzeug kann auch so ausgebildet sein, daß es eine pyramidenförmige Spitze aufweist. Hierdurch ließe sich ein etwa quadratisches Teigteil herstellen. Als besonders vorteilhaft hat sich ein derartig ausgebildeter Druckkörper herausgestellt.

Dadurch, daß der Druckkörper einen örtlich unterschiedlichen Verformungswiderstand aufweist, wie dies bei der Erfindung vorgesehen ist, läßt sich auf einfache Weise ein unterschiedliches Dickenprofil des Teigteils herstellen. Durch einen hohen Verformungswiderstand wird eine große Menge Teig verdrängt, Hierdurch ist die Dicke des Teigteils geringer als an einer Stelle, wo der Druckkörper einen geringen Verformungswiderstand aufweist.

In besonders vorteilhafter Weise ist der Druckkörper hohl und mit einem unter Druck stehenden Gas gefüllt. Als besonders vorteilhaft hat sich ein halbkugelförmiger Druckkörper herausgestellt. Bei einem derartigen Druckkörper läßt sich ein unterschiedlicher Verformungswiderstand dadurch erreichen, daß die Wandstärke des Druckkörpers unterschiedlich ausgebildet ist. Darüber hinaus können die Verformungseigenschaften des Druckkörpers durch den Gasdruck eingestellt werden. Der Gasdruck kann so gesteuert werden, daß er eine Funktion des Abstands des Werkzeugs von der Unterlage ist und damit eine Funktion der Vergrößerung der Fläche, welche das Teigteil auf die Unterlage preßt.

Eine Vorrichtung zur Durchführung des beschriebenen Verfahrens kann auch derart ausgebildet sein, daß das Werkzeug eine sich in Richtung Auflageplatte erstreckende Spitze aufweist, um die herum ein ringförmiger Körper angeordnet ist, welcher derart verformbar ist, daß sich die von ihm aufgespannte Fläche verändert. Nachdem die Werkzeugspitze in das Teigteil eingedrungen ist, wird der ringförmige Körper ebenfalls auf das Teigteil abgesenkt. Nachdem der ringförmige Körper soweit auf das Teigteil abgesenkt ist, daß er sich in einem vorbestimmten Abstand parallel zur Unterlage befindet, wodurch der sich unter der Spitze und dem ringförmigen Körper befindliche Teig nach außen verdrängt wurde, wird der ringförmige Körper verformt, so daß sich die von ihm aufgespannte Fläche vergrößert. Hierdurch wird der sich außerhalb des Rings befindliche Teig vom ringförmigen Körper nach außen verdrängt. Die aufgespannte Fläche kann beispielsweise kreisrund, oval oder rechteckig sein.

In besonders vorteilhafter Form kann der ringförmige Körper im Querschnitt zylinderförmig und um die ringförmig verlaufende Längsachse des Zylinders drehbar sein. Hierdurch kann der ringförmige Körper bei der Vergrößerung der von ihm aufgespannten Fläche auf dem Teig abgerollt werden, was sich sehr günstig auf die Verdrängung des Teigs auswirkt. Der ringförmige Körper kann aus einem elastischen Material bestehen. Er kann jedoch auch aus einem nichtelastischen Material bestehen, wobei die durch die Vergrößerung der von dem Ring aufgespannten Fläche vergrößerte Körperlänge durch einen manschettenförmigen Aufbau erreicht werden kann. Der Ring kann kreisrund sein, er kann jedoch auch etwa rechteckförmig ausgebildet sein.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:
Fig. 1 eine Ausführungsform einer erfindungsgemäßen Vorrichtung in schematischer Darstellung in Ruhestellung, und
Fig. 2 die in Fig. 1 gezeigte Vorrichtung in Arbeitsstellung.

Eine erfindungsgemäße Vorrichtung weist eine Auflageplatte 22 auf, auf die ein auszuformendes Teigteil 25 aufgebracht ist. Zwischen der Auflageplatte 22 und dem Teigteil 25 ist ein Trennmittel angeordnet.

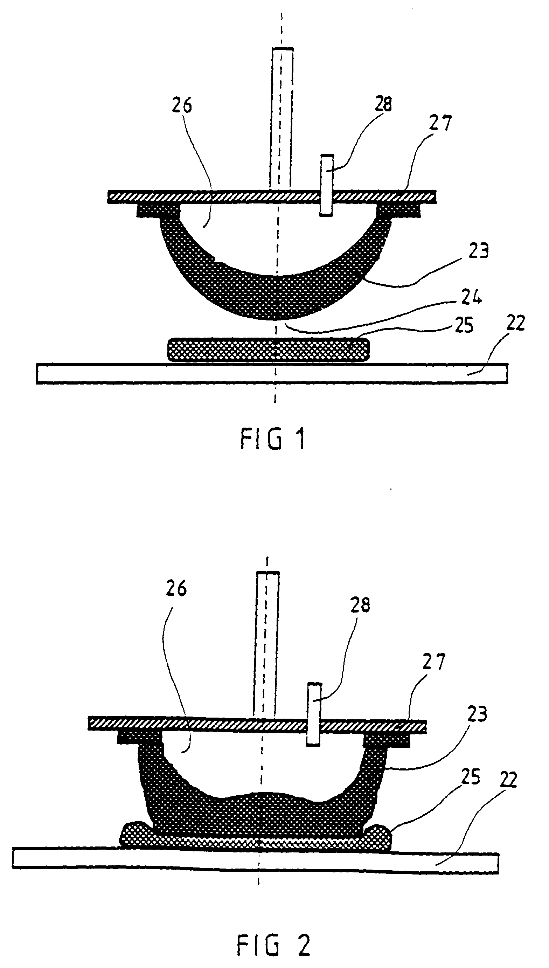

Oberhalb der Auflage 22 ist ein auf die Auflageplatte 22 absenkbares Werkzeug 23 angeordnet. Das Werkzeug 23 ist als elastisch verformbarer halbkugelförmiger Druckkörper ausgebildet. Der halbkugelförmige Druckkörper 23 weist in seinem in der Fig. 1 dargestellten Ausgangszustand an seiner der Auflageplatte 22 zugewandten Seite eine Pol 24 auf.

Der halbkugelförmige Druckkörper 23 ist hohl und weist in seinem Innern 26 ein unter einem ersten Druck stehendes Gas auf. Das Gas wird durch eine Zuführung 28, welche in einem die Halbkugel abdeckenden Flansch 27 angebracht ist, in das Innere 26 des Druckkörpers 23 geleitet.

Der Druckkörper 23 ist an einer nicht gezeigten Hubeinrichtung befestigt, die den Druckkörper 23 mit einer vorbestimmten Kraft und Geschwindigkeit auf die Auflageplatte 22 absenken kann.

Beim Absenken des Druckkörpers 23 auf die Auflageplatte 22 beziehungsweise das Teigteil 25 verflacht sich der Pol 24 des Druckkörpers 23 zunehmend, bis er einer Fläche entspricht, welche um den Anteil der elastischen Verformung des Teigteils größer als die vorbestimmte Fläche des ausgeformten Teigteils ist. Beim Absenken des Druckkörpers 23 auf das Teigteil 25 wird der Druck im Innern 26 des Druckkörpers 23 erhöht.

Der halbkugelförmige Druckkörper 23 ist in seiner Wandstärke so beschaffen, daß er sich an seinem Pol 24 nach innen stülpen kann. Die Wandstärke nimmt ausgehend vom Pol 24 in Richtung Äquator, an dem der Druckkörper 23 an dem Flansch 27 befestigt ist, ab. Durch Steuerung des Druck im Innern 26 des Druckkörper 23 sowie durch die Geschwindigkeit, mit der der Druckkörper 23 auf das Teigteil 25 abgesenkt wird, kann die Wandstärke des gepreßten Teigteils eingestellt werden.

Das Teigteil 24 dehnt sich beim Pressen in radialer Richtung aus, wobei immer weitere Teile vom halbkugelförmigen Druckkörper 23 überrollt werden. Der Teigboden wird dabei zunächst elastisch und anschließend plastisch verformt. Über eine nicht gezeigte Lageerfassung wird das Absenken des Druckkörpers 23 kontrolliert. Beim Erreichen einer bestimmten Position wird der Druckkörper 23 wieder zurückgezogen. Das ausgeformte Teigteil zieht sich danach um den Anteil der elastischen Verformung wieder zusammen.

## Patentansprüche

1. Vorrichtung zur Durchführung eines Verfahrens zur Herstellung von Teigteilen vorbestimmter Fläche und vorbestimmten Dickenprofils, bei welchem eine vorbestimmte Menge Teig auf eine Unterlage aufgebracht wird und auf den Teig mittels eines Werkzeugs Druck ausgeübt wird, wobei das Werkzeug auf den Teig aufgesetzt wird und den Teig zunächst punktförmig oder linienförmig berührt, wobei vom Berührungspunkt oder der Berührungslinie keine Fläche aufgespannt wird, und sodann das Werkzeug bis auf einen vorbestimmten Abstand zur Unterlage in den Teig eindringt, wobei die punkt- oder linienförmige Berührung in eine erste flächige Berührung des Teigs übergeht und der Teig unter der ersten Berührungsfläche mit einer ersten Kraft auf die Unterlage gepreßt wird, die erste Berühungsfläche sich kontinuierlich vergrößert und der Teig der Vergrößerungsfläche sodann mit einer zweiten Kraft auf die Unterlage gepreßt wird, wobei mit der Vergrößerung der Fläche sowie mit dem Aufpressen des Teigs auf die Unterlage solange fortgefahren wird, bis die Fläche des Teigteils der vorbestimmten Teigteilfläche entspricht, welche Vorrichtung eine Auflageplatte (22) und ein auf die Auflageplatte (22) absenkbares Werkzeug (23) aufweist, wobei das Werkzeug (23) als verformbarer Druckkörper ausgebildet ist, welcher in seinem Ausgangszustand an seiner der Auflageplatte zugewandten Seite einen Pol oder einen First aufweist,
dadurch gekennzeichnet,
daß der Druckkörper (23) einen örtlich unterschiedlichen Verformungswiderstand aufweist.

2. Vorrichtung nach Anspruch 1,
dadurch gekennzeichnet,
daß der Druckkörper (23) aus einem elastisch verformbaren Material besteht.

3. Vorrichtung nach Anspruch 1 oder 2,
dadurch gekennzeichnet,
daß der Druckkörper (23) hohl ist und mit einem unter Druck stehenden Gas ge füllt ist.

4. Vorrichtung nach einem der Ansprüche 1 bis 3,
dadurch gekennzeichnet,
daß die Wandstärke des Druckkörpers (23) unterschiedlich ist.
